# EUROPEAN PATENT SPECIFICATION

(11) **EP 1 928 200 B1**
(45) Date of publication and mention of the grant of the patent: **24.02.2010**
(21) Application number: 07121121.3
(22) Date of filing: 20.11.2007
(51) Int. Cl.: H04W 48/16

(54) **Mobile station capable of using two communication systems**
Mobilstation für zwei Kommunikationssysteme
Station mobile capable d'utiliser deux systèmes de communication

(30) Priority: 29.11.2006 JP 2006322268
(43) Date of publication of application: 04.06.2008
(73) Proprietor: FUJITSU LIMITED, Kawasaki-shi, Kanagawa 211-8588 (JP)
(72) Inventor: Fujii, Masatsugu c/o FUJITSU LIMITED, Kawasaki-shi, Kanagawa 211-8588 (JP)
(74) Representative: Stebbing, Timothy Charles

(56) References cited:
- GB-A- 2 419 046
- GB-A- 2 424 348
- US-A1- 2003 100 308
- US-A1- 2003 207 688

## Description

The present invention relates to a mobile station capable of using two communication systems, and more particularly to a mobile station, which is capable of using, for example, the WCDMA communication system and the GSM communication system, and which is capable of reducing power consumption.

Mobile communication systems include the WCDMA (Wideband-Code Division Multiple Access) communication system, which is an important technology used in Japan, and the GSM (Global System for Mobile Communications) communications system, which is a digital mobile telephone standard developed in Europe. In some territories, both types of system exist alongside each other.

Recently, mobile stations capable of using a plurality of communication systems or standards, which support these two communication systems, have been developed and are available on the market.

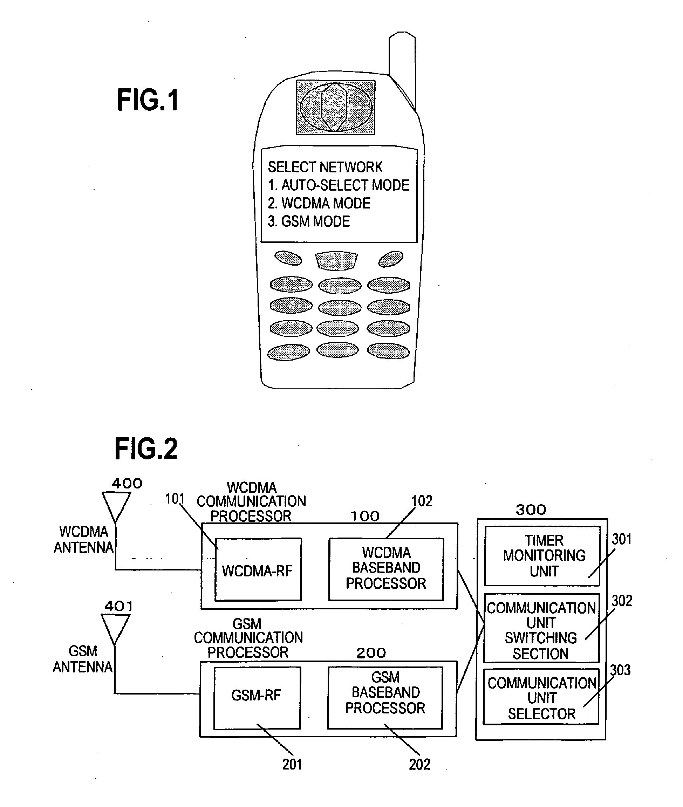

A mobile station such as a portable telephone which supports such two communication systems may have the following three mode settings, which can be set by the user via a display of the mobile station as shown in Fig. 1.
1. "Auto-select Mode"
2. "WCDMA Mode"
3. "GSM Mode"

The "Auto-select Mode" is a mode for comparing the reception states from both of a WCDMA base station and a GSM base station during standby mode, and automatically selecting the appropriate communication system cell.

Also, the "WCDMA Mode" only supports the WCDMA communication system. That is, when the "WCDMA Mode" is set, the terminal is the same as a single-mode communication mobile station which supports only the WCDMA system.

The "GSM Mode" only supports the GSM communication system. That is, when the "GSM Mode" is set, the terminal is the same as a single-mode communication mobile station which supports only the GSM system.

Basically, if the "Auto-select Mode" is selected in advance, the mobile station carries out communication system selection automatically in accordance with the environment, but since power consumption increases when the switchover operation is carried out more than needed, the use of a single mode, either the "WCDMA Mode" or the "GSM Mode", is recommended from the standpoint of curbing power consumption.

For example, in an environment where only a WCDMA network exists, setting the mobile station to the "WCDMA Mode" makes it possible to curb power consumption by only carrying out WCDMA standby operations without searching for a GSM network.

Fig. 2 shows a functional block diagram of a mobile station, which supports the two communication systems WCDMA and GSM corresponding to Fig. 1.

In a mobile station for which the "Auto-select Mode" has been selected, the user (i.e. the mobile station) sets either of the communication systems, either the WCDMA system or the GSM system, via a communication unit switching section 302. When the WCDMA communication system is set, a communication unit selector 303 selects the WCDMA communication system, and, by way of the communication unit switching section 302, starts up a WCDMA wireless unit (RF) 101 and a WCDMA baseband processor 102, and either transceives WCDMA signals or performs standby processing using a WCDMA antenna 400.

Supposing that the mobile station is using the WCDMA communication system and is in the standby mode (call-waiting mode), a WCDMA communication processor 100 regularly (for example, every two seconds) carries out processing for several ms (milliseconds) to ascertain the presence or absence of incoming call information based on the timer output of a timer monitoring unit 301 of a controller 300.

During this time, if it is necessary to measure the GSM reception level, the controller 300 starts up a GSM wireless unit (RF) 201 and a GSM baseband processor 202 of a GSM communication processor 200, and carries out a GSM reception level measurement.

The communication unit selector 303 may compare the reception levels obtained from the respective communication systems, and carry out a (re-selection) operation for selecting the communication system with the highest reception level.

In the case of the above example, the communication unit selector 303 compares the WCDMA reception level measured during standby processing by the WCDMA system against the GSM reception level measured by starting up the GSM communication processor 200 when the WCDMA communication processor 100 is in the sleep mode, and when the GSM reception level is higher than that of the WCDMA, carries out a re-selection operation to switch to the GSM standby mode, thereby automatically switching the communication system.

The problem addressed by the present invention (see below) arises when either the "WCDMA Mode" or the "GSM Mode" has been set rather than the "Auto-select Mode".

That is, in Fig. 2, since WCDMA is selected as the single-mode communication system when the "WCDMA Mode" has been selected, the communication unit switching section 302 starts up only the WCDMA communication processor 100, and does not start up the GSM communication processor 200.

When the mobile station is in a WCDMA communication network area, naturally, WCDMA standby processing is carried out.

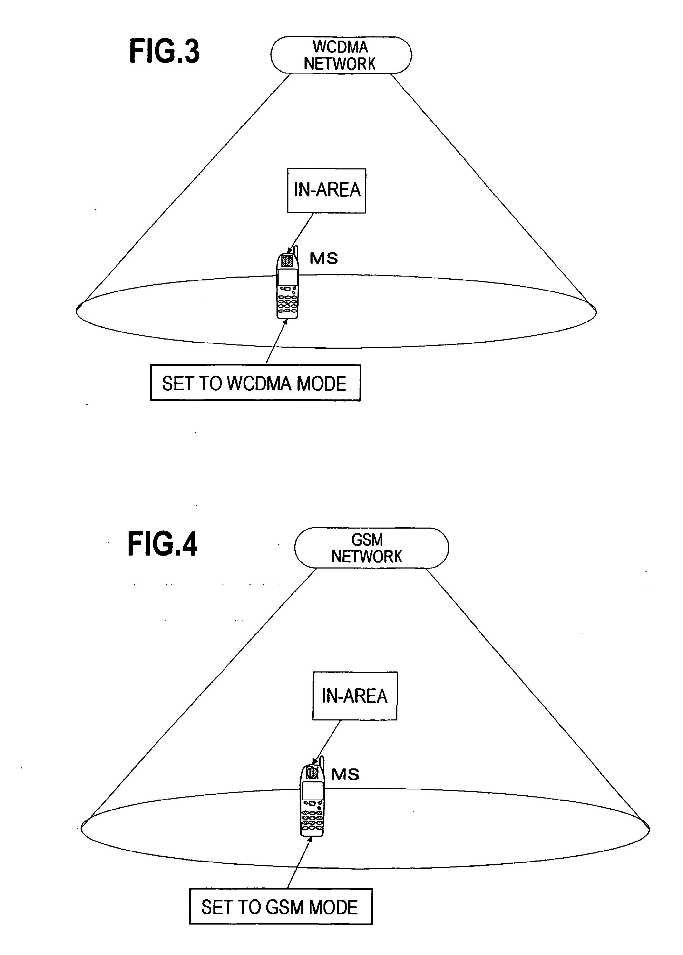

Fig. 3 shows a diagram in which a mobile station (MS) set to the WCDMA Mode is carrying out standby processing in a WCDMA communication network area. The fact that the mobile station MS is inside the reception area in the WCDMA Mode is displayed on the mobile station MS.

A mobile station MS set to the "GSM Mode" is the opposite of one that is set to the "WCDMA Mode" in that, as shown in Fig. 4, the mobile station MS set to the GSM Mode carries out standby processing in a GSM communication network area. The fact that the mobile station MS is inside a reception area in the GSM mode is displayed on the mobile station MS.

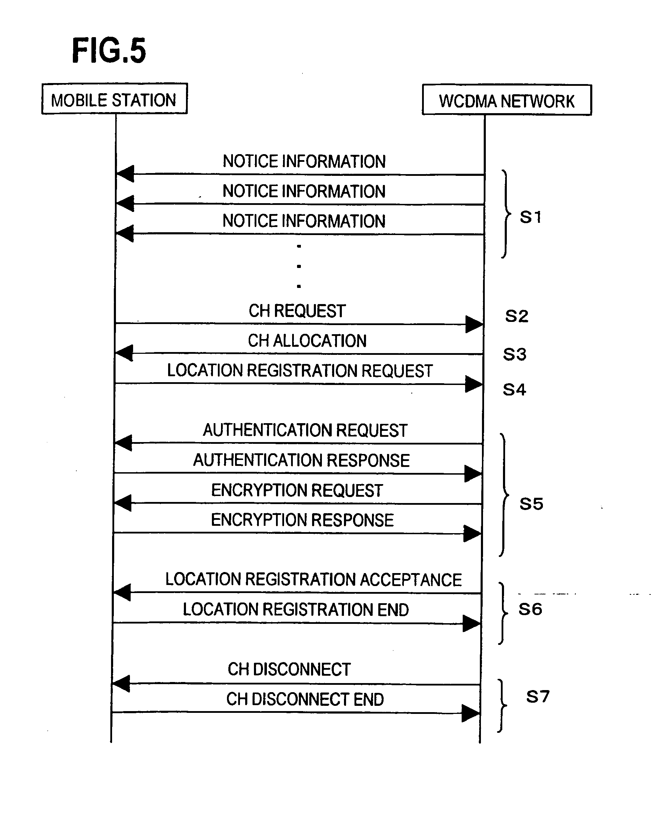

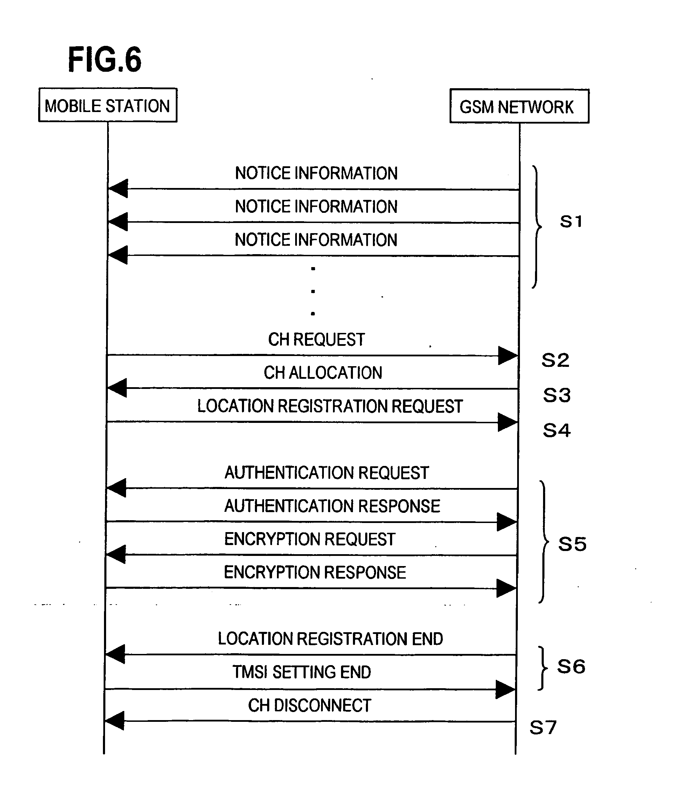

Fig. 5 and Fig. 6 are diagrams respectively showing examples of WCDMA and GSM location registration sequences. In Figs. 5 and 6, a mobile station MS receives notice signals from base stations in WCDMA and GSM networks, both of which it supports (Step S1), and the mobile station MS sends a channel request signal to the relevant base station (Step S2).

In response thereto, the mobile station MS receives a channel allocation signal from the base station (Step S3).

Next, the mobile station MS sends out a location registration request (Step S4).

In response to this, the base station carries out authentication request and encryption request procedures (Step S5), ends location registration (Step S6), and disconnects a channel to the mobile station MS (Step S7).

In addition, the mobile station MS for which location registration has been completed in the processing flows of the above Figs. 5 and 6 transitions to the standby processing mode, and regularly switches to the paging reception mode. In the paging reception mode, the mobile station regularly (in the case of WCDMA, for example, at a two second cycle) monitors for pages to its address on the basis of network parameters. During intervals other than regular paging monitoring, the mobile station (MS) transitions to the power saving mode.

Here, a proposed scheme for saving power in a mobile communication terminal capable of using a plurality of communication systems is disclosed in Japanese Patent Laid-open No. 2005-223711.

The scheme disclosed in Japanese Patent Laid-open No. 2005-223711 realizes power saving in the "Auto-select Mode", and curbs the consumption of the terminal battery by switching to a fixed mode when communication system switchover is being carried out frequently.

In the aspect described hereinabove, (i) when using a mobile station in the "GSM Mode" in an environment where only a WCDMA network exists, and (ii) when using a mobile station in the "WCDMA Mode" in an environment where only a GSM network exists, the following problems exist respectively.

Taking the case of the above-mentioned (i) as an example, since the mobile station MS is set in the "GSM Mode", the mobile station MS constantly tries to search for a GSM network despite being located in a WCDMA network. As a result, since a GSM network is not detected, the mobile station MS transitions to out-of-area, and the search for a GSM network is repeated.

In general, there is a tendency for a mobile station to consume more power when out-of-area than when in the standby mode, and network searches are repeated in a state in which power consumption is constantly high.

The same can be said for the opposite situation, in which the mobile station MS is being used in the "WCDMA Mode" of the above-mentioned (ii) in a strictly GSM network environment.

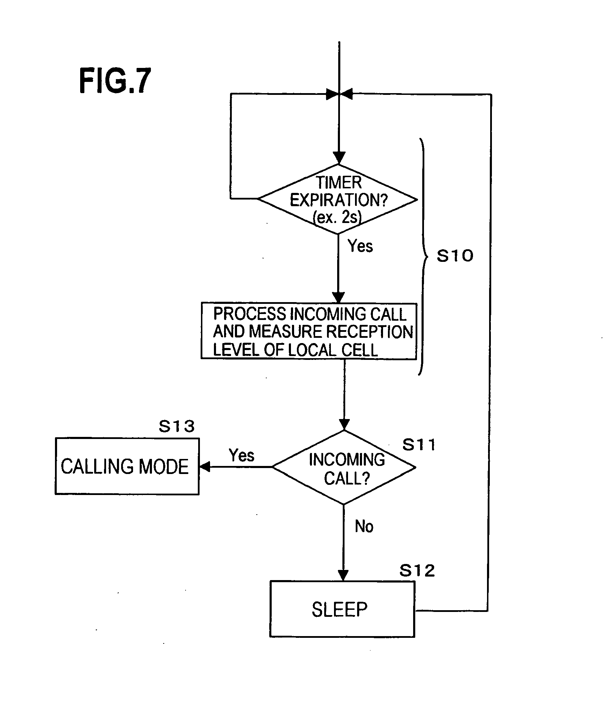

Fig. 7 shows a flowchart of operation when the mobile station MS is in the standby mode.

The mobile station MS, which is in the standby mode, regularly (for example, every two seconds) checks for an incoming call and measures the local cell reception level (Step S10) for several ms during the incoming call cycle based on notice information from the base station of the standby cell. When there is no incoming call (Step S11, NO), the mobile station MS repeats processing in which it transitions to the power saving mode (Step S12) until the next incoming call cycle.

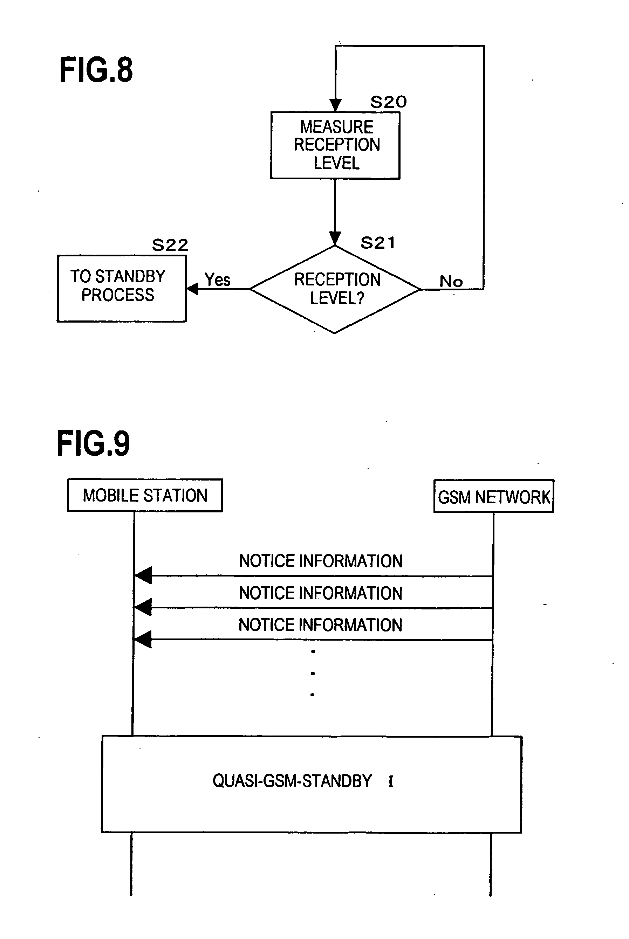

Conversely, Fig. 8 shows the flow of processing when the mobile station is in the out-of-area mode. In Fig. 8, in the case of the out-of-area mode, the mobile station repeats reception level measurements in the specified communication system without transitioning to the power saving mode (Step S20). When a reception level is detected during reception level measurement (Step S21, YES), standby processing is carried out (Step S22).

Consequently, as explained hereinabove, when the base station communication mode differs from the mobile station (MS) communication system setting, it is the same as when the mobile station MS is out-of-area, and the mobile station MS repeatedly carries out reception level measurements in the specified communication system without saving power, thereby consuming a lot of power.

GB-A-2 424 348 discloses a mobile station according to the preamble of claim 1. The mobile station only performs location registration processing with one communication system at a time.

Meanwhile, GB-A-2 419 046 discloses a mobile station which monitors signals not only from a serving base station of a first communication system but also from non-serving base stations of a different, second communication system by performing location processing with respect to the base stations of both systems.

Accordingly, it is desirable to provide a mobile station, which, while being a mobile station capable of using a plurality of communication systems, makes it possible to reduce power consumption when located in a service area other than that of the set communication system during use as a single-mode mobile communication terminal.

According to the present invention there is provided' a mobile station capable of using two or more different communication systems, one of which is set during use, comprising: two communication processing units respectively supporting the two communication systems; a communication unit switching section for setting communication to one of the different communication systems; and a communication switch selector for selecting to activate one of the communication processing units which corresponds to the one of the different communication systems set by the communication unit switching section, arranged such that when a mobile station location is out of communication range for the set one of the different communication systems, the communication switch selector carries out a search to determine if the service area is in communication range of another communication system; **characterised in that** when the service area is in communication range of the other communication system, the communication switch selector is arranged to establish a quasi-standby process, in which a monitoring mode is performed to regularly monitor notice information from a base station of the other communication system without carrying out location registration processing.

In the above-mentioned mobile station, the communication switch selector, in the monitoring mode for regularly monitoring the notice information, uses the communication processor of the set communication system to carry out location registration to the base station upon detecting that, according to the notice information, the mobile station is inside the area of the set communication system.

Consequently, ordinary standby involves a process for regularly carrying out paging monitoring relative to the mobile station itself, and when a change of cells becomes necessary, the reception level of an acquired GSM cell, the reception levels of surrounding GSM cells, and notice information must be regularly monitored and updated due to the need to carry out cell change processing within a prescribed time period. However, during quasi-GSM-standby, the paging monitoring required during ordinary standby is not needed since the mobile station is independently and artificially performing standby, and the updating of GSM cell information can also be set to a longer cycle than that of an ordinary standby time.

Further, in the above explanation, a search is carried out to determine if the service area is that of the other communication system, and when the service area is that of the above-mentioned other communication system, the relevant communication system can be visibly displayed to a user.

Furthermore, the mobile station MS may comprise: a GPS function processor, in other words a locating device employing a satellite-based navigation system such as the GPS; and an area information section for storing communication system service area information, and when the mobile station location is out of communication range for the set communication system area, the above-mentioned communication switch selector compares the mobile station location detected by the above-mentioned GPS function processor with communication system service area information stored in the above-mentioned area information section, and if the location is in the service area of the other communication system, sets the mobile station to the monitoring mode for regularly monitoring for notice information from the above-mentioned other communication system base station without carrying out location registration processing.

In addition, the location information obtained from the GPS can be compared against frequency information, which is stored in the area information section, and which is utilized by the communication system, and only searches for the frequency band being used. This makes it possible to reduce power consumption by not searching for frequency bands that are not in use.

Further, it is possible to specify the communication system capable of being used in the current area by comparing the country code and business code of the notice information reported from the communication network against the service area information stored in the area information section.

Consequently, either the user is notified of the available communication system, or standby is carried out artificially in the available communication system, thereby making it possible to lessen power consumption.

According to the above-mentioned characteristic feature, while a dual-mode mobile station is being used as a single-mode mobile station, mobile station operation outside a service area can be manipulated so as to make it possible to curb power consumption.

Further, when the mobile station MS has a GPS function, it is also possible to allocate the appropriate service communication system based on current location information, and to curb power consumption by having a function that enables the appropriate communication system to be selected.

Consequently, according to the above-mentioned characteristic features of the present invention, a mobile station, which is in the power-consuming out-of-area state, transitions to the quasi-standby mode, enabling mobile station power-saving processing, and making it possible to curb power consumption.

Further, prompting the appropriate communication system to the user, and making combined use of a GPS function makes it possible to curb power consumption by selecting the proper communication system.

Reference is made, by way of example only, to the accompanying drawings in which:
Fig. 1 is a diagram showing a mobile station having communication functions, which support two communication systems;
Fig. 2 shows a functional block diagram of a mobile station, which supports the two communication systems, WCDMA and GSM, corresponding to Fig. 1;
Fig. 3 shows a diagram in which a mobile station MS set to the WCDMA mode is carrying out standby processing in a WCDMA communication network area;
Fig. 4 shows a diagram in which a mobile station MS set to the GSM mode is carrying out standby processing in a GSM communication network area;
Fig. 5 is a diagram showing an example of a WCDMA location registration sequences;
Fig. 6 is a diagram showing an example of a GSM location registration sequence;
Fig. 7 is a diagram showing a flowchart of the mobile station MS in the standby mode;
Fig. 8 is a diagram showing the flow of processing when the mobile station is in an out-of-area state;
Fig. 9 is a diagram showing the processing sequence up to quasi-GSM-standby;
Fig. 10 is a diagram showing a flowchart up to quasi-GSM-standby;
Fig. 11 is a diagram showing a situation in which a mobile station performing quasi-GSM-standby in the "WCDMA Mode" is located in an area, which overlaps the GSM network of a peripheral cell disclosed in notice information;
Fig. 12 is a diagram showing a flowchart mobile station processing corresponding to Fig. 11;
Fig. 13 is a diagram for explaining processing when a switchover process to WCDMA is carried out in a situation in which GSM quasi-standby is not carried out in accordance with the present invention;
Fig. 14 is a diagram showing an example of the constitution of a mobile station, which accords with another embodiment of the present invention; and
Fig. 15 is the processing flow of the GPS antenna 402, GPS processor 500, and area information section 304 in Fig. 14.

The embodiments of the present invention will be explained hereinbelow in accordance with the figures.

In the following embodiments, it is assumed that two types of network may exist; a first type, exemplified by GSM, which may be considered as a less advanced, more widely available network; and a second type, exemplified by W-CDMA, which may be considered as a more advanced but less widely available network.

A characteristic feature of an embodiment of the present invention is that a quasi-GSM-standby process is established.

As explained with regard to the above-mentioned problem, using a mobile station in the "WCDMA Mode" in an environment where only a GSM network exists constitutes a WCDMA out-of-area state in which power consumption is great. At present, given that GSM networks are more widely established than those using 3G technology such as W-CDMA, this may be a more likely scenario than using the mobile station in a "GSM only" mode where only W-CDMA is available.

The quasi-GSM-standby process is a process in which a GSM area search is carried out subsequent to transitioning to the WCDMA out-of-area state in the "WCDMA Mode", and when a GSM network is acquired, GSM network reception level and notice information monitoring are carried out regularly without performing an ordinary location registration process.

Fig. 9 shows the sequence of processes up to quasi-GSM-standby. That is, in Fig. 9, subsequent to a GSM network being acquired, the mobile station MS independently and artificially carries out standby operations relative to the GSM network without accessing the GSM network (Process Step I) .

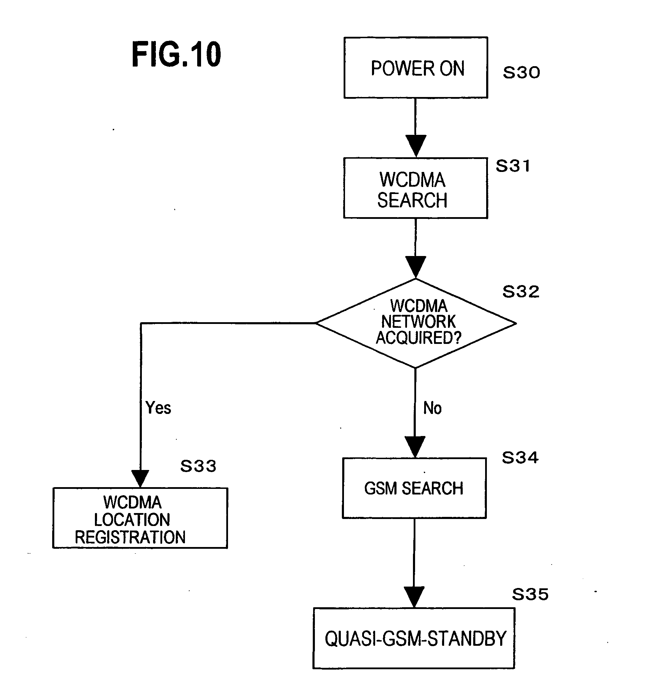

Further, a flowchart of processing up to quasi-GSM-standby is as shown in Fig. 10.

Furthermore, the process flows shown in Figs. 9 and 10 are controlled by firmware stored in the communication unit selector 303 of the controller 300.

In Fig. 10, when the power is turned ON (Step 30), the mobile station carries out a WCDMA search (Step S31). When a WCDMA network can be acquired (Step S32, Yes), the WCDMA communication processor 100 shuts down, and the mobile station registers its location with the WCDMA base station (Step S33).

Conversely, when a WCDMA network cannot be acquired (Step S32, No), the GSM communication processor 200 boots up, and carries out a GSM search (Step S34). If a GSM network can be acquired, the mobile station transitions to quasi-GSM-standby (Step S35).

In the quasi-GSM-standby mode (Step S35), the mobile station status display will indicate out-of-area to the user, but since the mobile station is artificially acquiring the GSM network, with the exception of regularly checking for GSM notice information, power saving processing is possible the same as in an ordinary standby operation.

In an ordinary standby, processing for monitoring for paging to the mobile station itself must be carried out regularly, and the reception level of the acquired GSM cell, the reception level of a peripheral GSM cell, notice information and so forth must be regularly monitored and updated due to the need to carry out change-of-cell processing within a prescribed time period when a change of cells is required.

However, during quasi-GSM-standby, since the mobile station is artificially engaging in standby on its own, the paging monitoring required in ordinary standby is not necessary, and the updating of GSM cell information can be set to a longer cycle than that of ordinary standby.

This will be explained using Fig. 7. Because the mobile station MS is in the standby mode (Step S10), it is necessary to check for incoming call information during the standby time specified in the notice information, but as shown in Fig. 9, when carrying out quasi-standby, incoming call information is not transmitted from the GSM network, doing away with the need to carry out standby processing at a cycle based on the notice information.

In the example shown in Fig. 7, the incoming call cycle specified in the notice information is two seconds, and therefore it is necessary to return from the power saving mode and check for an incoming call every two seconds, but in the case of quasi-standby, it is possible to save power by setting this cycle to longer than two seconds (for example, 10 seconds). As a result, the power consumption of the mobile station MS can be curbed.

Further, when in the quasi-GSM-standby mode, it is possible to notify the user that he is located in a GSM network, and to prompt him to carry out a network mode change. In addition, when the user changes the network mode while in quasi-GSM-standby, GSM network acquisition has already been completed, so that location registration processing can be carried out to the GSM network without doing a GSM search, the mobile station MS quickly transitions to in-area, and the power saved by not doing the GSM search also makes it possible to curb power consumption.

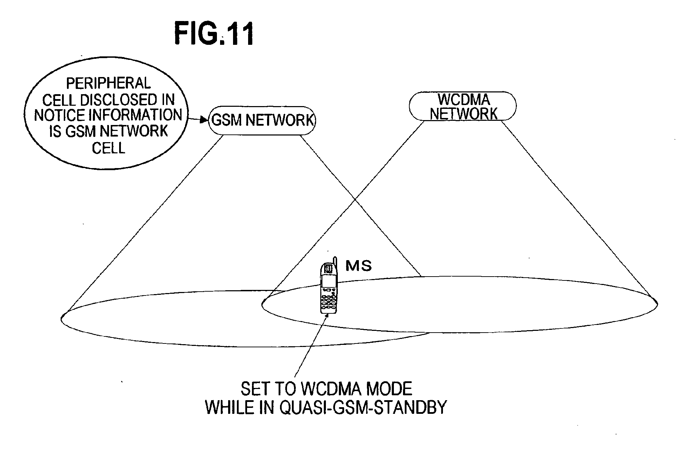

Depending on the environment, there are areas in which a GSM network and WCDMA network are serviced simultaneously. Fig. 11 shows a situation in which a mobile station carrying out quasi-GSM-standby processing in the "WCDMA Mode" is located in an area, which overlaps with the GSM network of a peripheral cell disclosed in the notice information.

When, after regularly monitoring GSM notice information in the quasi-GSM-standby mode while being set to the WCDMA mode, it is determined that a peripheral cell is a WCDMA cell, the mobile station quickly registers its location in the WCDMA network, and transitions to a regular WCDMA standby mode.

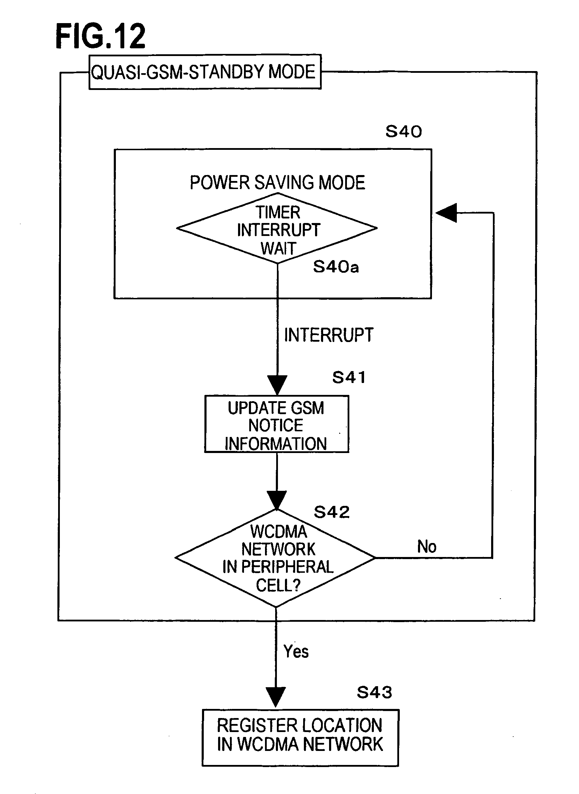

Fig. 12 is a diagram showing a flowchart of mobile station processing corresponding to Fig. 11.

That is, if a timer interrupt occurs (Step S40a) when saving power in the quasi-GSM-standby mode (Step S40), GSM notice information is updated (Step S41), and new GSM notice information is acquired (Step S41).

When the updated GSM notice information shows that the peripheral cell is the WCDMA network (Step S42, Yes), location registration processing is formally carried out in the WCDMA network (Step S43).

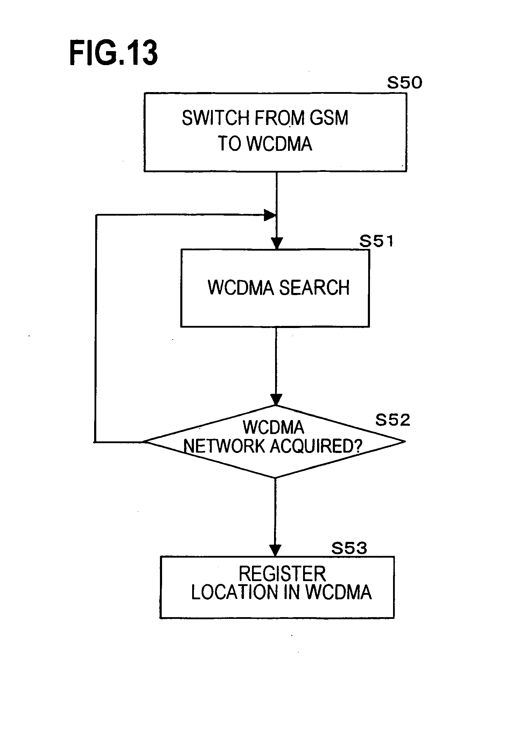

Therefore, if switchover processing to WCDMA is carried out as shown in Fig. 13 (Step S50) when quasi-GSM-standby according to the present invention is not being carried out, a WCDMA search must be carried out (Step S51) since it is unknown if a WCDMA network exists or not. By contrast, since there is no need to carry out a WCDMA search with the present invention as described above, power consumption can be reduced.

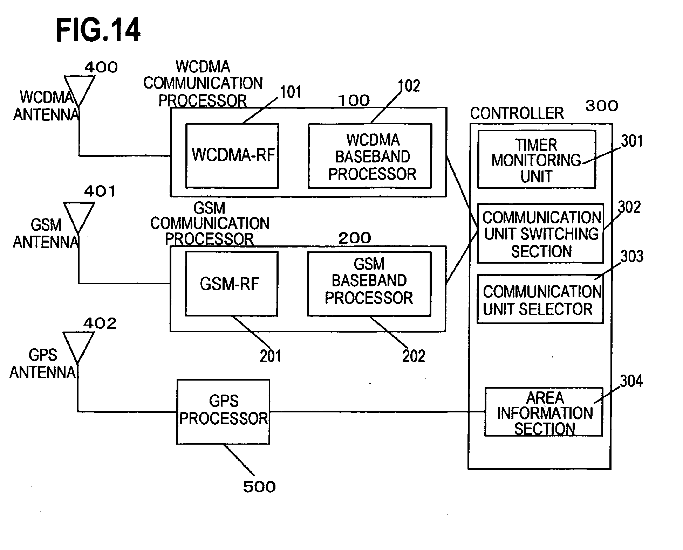

Fig. 14 is an example of the constitution of a mobile station according to another embodiment of the present invention. In this embodiment, the mobile station MS further has a GPS (Global Positioning System) function processor 500. This makes it possible to select an available service area based on the GPS location information.

In Fig. 14, the mobile station MS has a GPS antenna 402, a GPS processor 500, and an area information section 304.

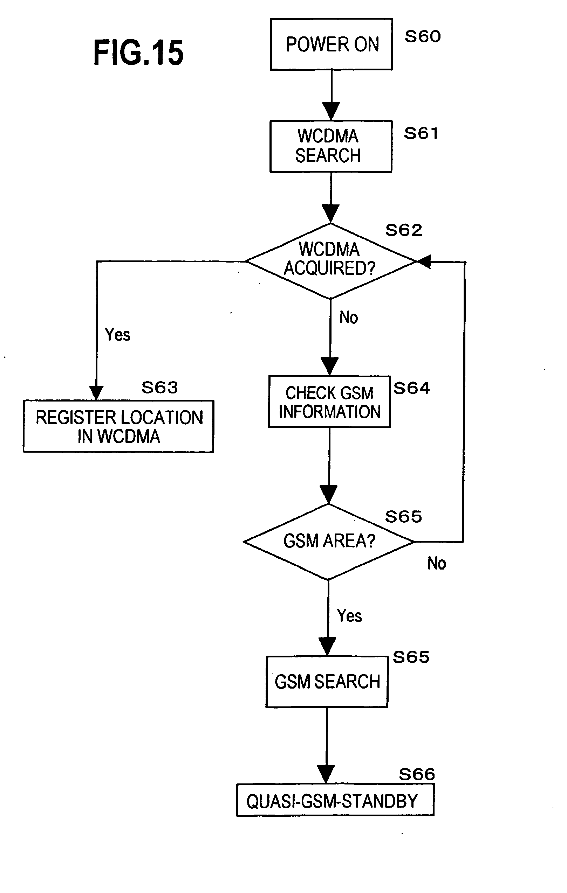

Fig. 15 is the flow of processing of the GPS antenna 402, a GPS processor 500, and an area information section 304 in Fig. 14.

When the power is turned ON in the WCDMA mode (Step S60, the mobile station MS searches for the WCDMA network (Step S61). When the WCDMA network cannot be acquired via this search (Step S62, No), the controller 300 compares the GPS information obtained by the GPS function processor 500 (Step S64) against communication system service area information stored in the area information section 304 to determine if it is a GSM area (Step S65). If it is a GSM area (Step S65, Yes), the mobile station MS searches, for the GSM network (Step S66), and transitions to quasi-GSM-standby (Step S67).

In the above explanation of the embodiment, the discussion focused on an example in which the mobile station MS was set to the WCDMA Mode, but the same effect is possible by reversing the operation in the case of a mobile station MS that is set to the GSM Mode. In other words, the present invention is equally applicable to the case where a mobile phone is set to "GSM only" in an area served by WCDMA.

As described hereinabove, in a mobile station, which supports a plurality of communication systems, having two communication systems, the WCDMA system and the GSM system, when the mobile station, which is capable of being used in single-mode operation, is used outside of a service area, for example, the present invention makes it possible for the mobile station being used in the GSM Mode in an environment where GSM services are not provided, such as Japan, to transition to quasi-WCDMA-standby.

Further, if GPS functions can be used at the same time, a WCDMA service area can be selected based on the geographical location information.

Thus, while a dual-mode mobile station is being used as a single-mode mobile station, the operation of the mobile station when outside the service area can be manipulated to make it possible to curb power consumption. Further, when the mobile station has a locating function such as GPS, it is also possible to allocate the appropriate service communication system based on the current location, and to curb power consumption by having a function that enables the appropriate communication system to be selected.

As will be apparent to those skilled in the art, GSM and W-CDMA are only two examples of wireless communication systems to which the present invention may be applied. Moreover, GPS is only one example of a satellite-based navigation system which may be employed in embodying the present invention; other examples include GLONASS and Galileo. References to "GPS" in this specification and claims are this to be interpreted broadly.

Furthermore, although the above description has referred to switching between two wireless communication systems by way of example, the present invention can of course be applied to switching among any number of wireless communication systems if needed.

## Claims

1. A mobile station (MS) capable of using two or more different communication systems, one of which is set during use, comprising:
two communication processing units (100, 200) respectively supporting the two communication systems;
a communication unit switching section (302) for setting communication to one of the different communication systems; and
a communication switch selector (303) for selecting to activate one of the communication processing units (100, 200) which corresponds to the one of the different communication systems set by the communication unit switching section (302), arranged such that when a mobile station location is out of communication range for the set one of the different communication systems, the communication switch selector (303) carries out a search (S34) to determine if the service area is in communication range of another communication system; **characterised in that**
when the service area is in communication range of the other communication system, the communication switch selector (303) is arranged to establish a quasi-standby process (S35), in which a monitoring mode is performed to regularly monitor notice information from a base station (BS) of the other communication system without carrying out location registration processing.

2. The mobile station according to Claim 1, wherein, in the monitoring mode for regularly monitoring the notice information, the communication switch selector (303) is arranged to use the communication processing unit (100 or 200) of the set communication system to carry out location registration to the base station upon detecting that, according to the notice information, the mobile station (MS) is inside the area of the set communication system.

3. The mobile station according to Claim 1 or 2, arranged to carry out a search to determine if the service area is that of another communication system, so that when the service area is that of the other communication system, this relevant communication system can be visibly displayed to a user.

4. The mobile station according to any preceding claim, further comprising:
a GPS function processor (500); and
an area information section (304) storing communication system service area information, arranged and that
when a mobile station location is out of communication range for the set communication system, the communication switch selector (303) compares the mobile station location detected by the GPS function processor (500) with communication system service area information stored in the area information section (304), and if the mobile station is inside the service area of the other communication system, the communication switch selector (303) sets the mobile station to the monitoring mode for regularly monitoring notice information from a base station of the other communication system without carrying out location registration processing.

5. The mobile station according to Claim 4, arranged to specify a frequency band being utilized for the communication system for the current area from information obtained from the area information section (304), such that no search is carried out for a frequency band that is not in the area.

## Patentansprüche

1. Mobilstation (MS), die zwei oder mehrere verschiedene Kommunikationssysteme verwenden kann, von denen eines während der Verwendung eingestellt wird, mit:
zwei Kommunikationsverarbeitungseinheiten (100, 200), die jeweilig die zwei Kommunikationssysteme unterstützen;
einer Kommunikationseinheitenumschaltsektion (302) zum Einstellen der Kommunikation auf eines der verschiedenen Kommunikationssysteme; und
einem Kommunikationsumschaltselektor (303) zum Selektieren, um eine der Kommunikationsverarbeitungseinheiten (100, 200) zu aktivieren, die dem einen der verschiedenen Kommunikationssysteme entspricht, das durch die Kommunikationseinheitenumschaltsektion (302) eingestellt wurde, der so angeordnet ist, dass dann, wenn ein Ort einer Mobilstation außerhalb der Kommunikationsreichweite für das eingestellte der verschiedenen Kommunikationssysteme liegt, der Kommunikationsumschaltselektor (303) eine Suche ausführt (S34), um zu bestimmen, ob der Versorgungsbereich innerhalb der Kommunikationsreichweite eines anderen Kommunikationssystems liegt; **dadurch gekennzeichnet, dass** dann,
wenn der Versorgungsbereich innerhalb der Kommunikationsreichweite des anderen Kommunikationssystems liegt, der Kommunikationsumschaltselektor (303) angeordnet ist, um einen Quasi-Standby-Prozess (S35) einzurichten, bei dem ein Überwachungsmodus ausgeführt wird, um Mitteilungsinformationen von einer Basisstation (BS) des anderen Kommunikationssystems regelmäßig zu überwachen, ohne eine Ortsregistrierungsverarbeitung auszuführen.

2. Mobilstation nach Anspruch 1, bei der im Überwachungsmodus zum regelmäßigen Überwachen der Mitteilungsinformationen der Kommunikationsumschaltselektor (303) angeordnet ist, um die Kommunikationsverarbeitungseinheit (100 oder 200) des eingestellten Kommunikationssystems zu verwenden, um eine Ortsregistrierung an der Basisstation auszuführen, wenn detektiert wird, dass gemäß den Mittelilungsinformationen die Mobilstation (MS) innerhalb des Bereiches des eingestellten Kommunikationssystems ist.

3. Mobilstation nach Anspruch 1 oder 2, die angeordnet ist, um eine Suche auszuführen, um zu bestimmen, ob der Versorgungsbereich jener eines anderen Kommunikationssystems ist, so dass dann, wenn der Versorgungsbereich jener des anderen Kommunikationssystems ist, dieses relevante Kommunikationssystem für einen Nutzer sichtbar angezeigt werden kann.

4. Mobilstation nach einem vorhergehenden Anspruch, ferner mit:
einem GPS-Funktionsprozessor (500); und
einer Bereichsinformationssektion (304), die Kommunikationssystem-Versorgungsbereichsinformationen speichert und so angeordnet ist, dass dann,
wenn ein Ort einer Mobilstation außerhalb der Kommunikationsreichweite für das eingestellte Kommunikationssystem liegt, der Kommunikationsumschaltselektor (303) den durch den GPS-Funktionsprozessor (500) detektierten Ort der Mobilstation mit Kommunikationssystem-Versorgungsbereichsinformationen vergleicht, die in der Bereichsinformationssektion (304) gespeichert sind, und falls die Mobilstation innerhalb des Versorgungsbereiches des anderen Kommunikationssystems ist, der Kommunikationsumschaltselektor (303) die Mobilstation auf den Oberwachungsmodus zum regelmäßigen Überwachen von Mitteilungsinformationen von einer Basisstation des anderen Kommunikationssystems einstellt, ohne eine Ortsregistrierungsverarbeitung auszuführen.

5. Mobilstation nach Anspruch 4, die angeordnet ist, um ein Frequenzband, das für das Kommunikationssystem für den gegenwärtigen Dereich genutzt wird, von Informationen zu spezifizieren, die von der Bereichsinformationssektion (304) erhalten werden, so dass für ein Frequenzband, das nicht in dem Bereich liegt, keine Suche ausgeführt wird.

## Revendications

1. Station mobile (MS) capable d'utiliser deux systèmes de communication différents ou plus, dont l'un d'eux est défini pendant l'utilisation, la station mobile comprenant :
deux unités de traitement de communication (100, 200) qui supportent chacune l'un des deux systèmes de communication ;
une section commutation d'unités de communication (302) pour l'établissement de la communication sur l'un des différents systèmes de communication ; et
un sélecteur de commutation de communication (303) pour l'activation sélective de l'une des unités de traitement de communication (100, 200) en correspondance avec celui des différents systèmes de communication qui a été défini par la section commutation d'unités de communication (302), conçu de telle sorte que, lorsqu'une station mobile se trouve hors de portée de communication de celui des différents systèmes de communication qui a été défini, le sélecteur de commutation de communication (303) effectue une recherche (S34) pour déterminer si la zone de desserte se trouve à portée de communication d'un autre système de communication ; **caractérisé en ce que**
lorsque la zone de desserte se trouve à portée de communication de l'autre système de communication, le sélecteur de commutation de communication (303) est conçu pour exécuter un processus de quasi-veille (S35), dans lequel un mode surveillance est mis en oeuvre pour surveiller régulièrement l'arrivée de notifications en provenance d'une station de base (BS) de l'autre système de communication, sans effectuer d'opération d'enregistrement de position.

2. Station mobile selon la revendication 1, dans laquelle, dans le mode surveillance pour surveiller régulièrement l'arrivée de notifications, le sélecteur de commutation de communication (303) est conçu pour utiliser l'unité de traitement de communication (100 ou 200) du système de communication qui est défini pour exécuter un enregistrement de position auprès de la station de base lorsqu'il est détecté, d'après les notifications, que la station mobile (MS) se trouve dans la zone du système de communication défini.

3. Station mobile selon la revendication 1 ou 2, conçue pour effectuer une recherche pour déterminer si la zone de desserte est celle d'un autre système de communication, de telle sorte que, lorsque la zone de desserte est celle de l'autre système de communication, ce système de communication pertinent puisse être présenté de façon visible à un utilisateur.

4. Station mobile selon l'une quelconque des revendications précédentes, comprenant en outre :
un processeur de fonction GPS (500) ; et
une section informations de zone (304) stockant les informations de zones de desserte des systèmes de communication, conçu de façon que, lorsque la position de la station mobile est hors de portée de communication du système de communication défini, le sélecteur de commutation de communication (303) compare la position de la station mobile détectée par le processeur de fonction GPS (500) aux informations de zones de desserte des systèmes de communication stockées dans la section informations de zone (304) et que, si la station mobile se trouve dans la zone de desserte de l'autre système de communication, le sélecteur de commutation de communication (303) fasse passer la station mobile au mode surveillance afin qu'elle surveille régulièrement les notifications provenant d'une station de base de l'autre système de communication, sans effectuer d'opération d'enregistrement de position.

5. Station mobile selon la revendication 4, conçue pour spécifier une bande de fréquence utilisée pour le système de communication pour la zone en cours, à partir des informations obtenues de la section informations de zone (304), de telle sorte qu'aucune recherche ne soit effectuée pour une bande de fréquence qui ne se trouve pas dans la zone.
